# EUROPÄISCHE PATENTANMELDUNG

(11) **EP 0 536 618 A1**
(43) Veröffentlichungstag der Anmeldung: **14.04.1993**
(21) Anmeldenummer: 92116595.7
(22) Anmeldetag: 29.09.1992
(51) Int. Cl.: G03B 23/14

(54) **Diaprojektor**

(30) Priorität: 08.10.1991 DE 4133249
(71) Anmelder: Carl Braun Camera-Werk GmbH, D-90429 Nürnberg (DE)
(72) Erfinder: Mäusbacher, Rainer, W-8500 Nürnberg (DE)
(74) Vertreter: Göbel, Matthias, Dipl.-Ing.

(57) **Zusammenfassung**

Bei einem Diaprojektor mit einem Projektorgehäuse und einer Bildbühne für Diapositive, bei dem die Bildbühne einen zwischen einer inneren Stellung im Projektorgehäuse und einer äußeren Stellung verschiebbaren rahmenförmigen Bildbühnenabschnitt zur Aufnahme eines Diapositivs aufweist, wobei der Bildbühnenabschnitt zum Einsetzen oder Herausnehmen eines Diapositivs mittels einer Drehfeder selbsttätig aus der inneren Stellung in die äußere Stellung führbar und mittels einer Klinke in der inneren Stellung freigebbar fixierbar ist und bei dem der Bildbühnenabschnitt eine Zahnstange aufweist, die mit einem im Projektorgehäuse drehbar angeordneten, durch die Drehfeder vorgespannten Ritzel kämmt, ist zum gleichmäßig sicheren Herausführen des Bildbühnenabschnitts in die äußere Stellung das Ritzel (7) unter Zwischenfügung eines zähflüssigen, gleitfähigen Mediums an einem projektorgehäusefesten Stützkörper (9) frei drehbar anliegend ausgebildet.

## Beschreibung

Die Erfindung betrifft einen Diaprojektor mit einem Projektorgehäuse und einer Bildbühne für Diapositive, bei dem die Bildbühne einen zwischen einer inneren Stellung im Projektorgehäuse und einer äußeren Stellung verschiebbaren rahmenförmigen Bildbühnenabschnitt zur Aufnahme eines Diapositivs aufweist, wobei der Bildbühnenabschnitt zum Einsetzen oder Herausnehmen eines Diapositivs mittels einer Drehfeder selbsttätig aus der inneren Stellung in die äußere Stellung führbar und mittels einer Klinke in der inneren Stellung freigebbar fixierbar ist und bei dem der Bildbühnenabschnitt eine Zahnstange aufweist, die mit einem im Projektorgehäuse drehbar angeordneten, durch die Drehfeder vorgespannten Ritzel kämmt.

Bei einem Diaprojektor dieser Art (DE-OS 36 30 238) wird der Bildbühnenabschnitt in unkontrollierter Weise mehr oder weniger schnell durch die Drehfeder aus der inneren in die äußere Stellung herausbewegt, wodurch sich unerwünschte, mechanische Belastungen am Bildbühnenabschnitt und Diapositiv beim Einlaufen in die äußere Stellung ergeben.

Es ist Aufgabe der Erfindung Maßnahmen zum kontinuierlich gleichmäßig sicheren Herausführen des Bildbühnenabschnitts in die äußere Stellung zu schaffen.

Erfindungsgemäß wird diese Aufgabe dadurch gelöst, daß das Ritzel unter Zwischenfügung eines zähflüssigen gleitfähigen Mediums an einem projektorgehäusefesten Stützkörper frei drehbar anliegt. Bevorzugt ist das zähflüssige gleitfähige Medium durch ein Schmierfettdepot mit zähflüssiger Viskosität gebildet. Auf diese Weise wird ein Reibungsschluß zwischen dem Bildbühnenabschnitt und dem Projektorgehäuse geschaffen, der für eine gleichmäßig kontinuierliche Bewegung des Bildbühnenabschnitts unter dem Einfluß der Drehfeder führt. Die Viskosität des Schmierfettdepots ist dabei derart gewählt, daß die erforderliche Reibung in allen Drehstellungen des Ritzels gewährleistet bleibt.

In Ausgestaltung des Diaprojektors ist vorgesehen, daß das Ritzel mit einem Ringbund unter Bildung eines Labyrinths in eine durch einen stützkörperfesten Ringbund gebildete Ausnehmung im Stützkörper eintaucht und daß die Räume zwischen den beiden Ringbunden mindestens abschnittsweise mit zähflüssigem gleitfähigem Medium, bevorzugt Schmierfett ausgefüllt ist. Es versteht sich, daß in Abwandlung des Erfindungsgedankens auch mehrere Ringbunde am Ritzel angeordnet sein können, die mit stützkörperfesten Ringbunden zur Bildung eines Labyrinths zur Wirkung kommen können.

Weiter ist vorgesehen, den Stützkörper topfförmig auszubilden, innen konzentrisch im Abstand zum Ringbund einen den Stützkörper am Projektorgehäuse festlegenden Haltezapfen zu versehen, der die Drehfeder stützt und das Ritzel lagert. Hierdurch sind zwischen den Ringbunden sowie dem inneren Ringbund und dem Haltezapfen Räume gebildet, die insgesamt mit zähflüssigem gleitfähigem Medium, z.B. Schmierfett, auffüllbar sind.

Die Erfindung ist anhand eines Ausführungsbeispiels in der Zeichnung verdeutlicht. Hierin bedeuten:
- Fig. 1: ein Teilstück eines Projektors mit einem Bildbühnenabschnitt in innerer Stellung, in Vorderansicht,
- Fig. 2: ein Teilstück eines Projektors mit einem Bildbühnenabschnitt in äußerer Stellung, in Vorderansicht und
- Fig. 3: einen Schnitt nach der Linie III-III der Fig. 1.

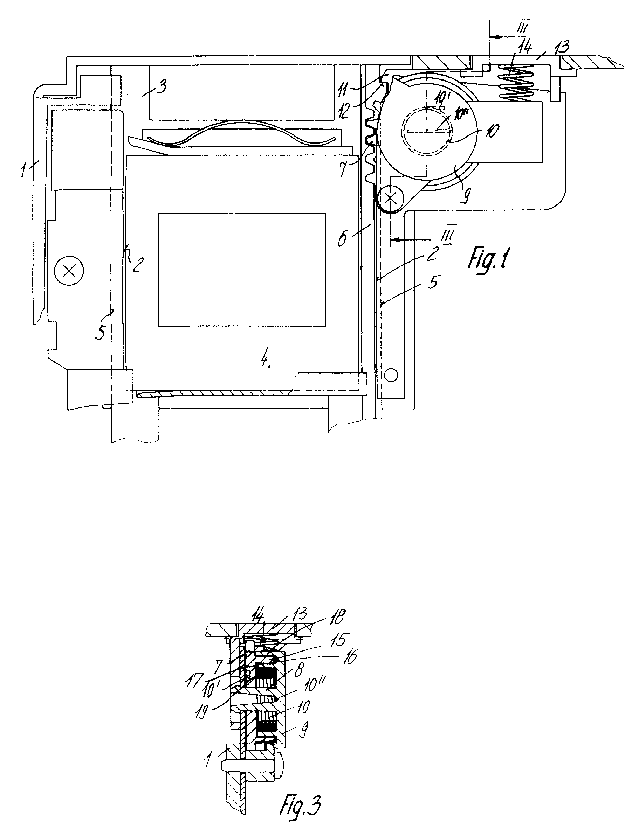

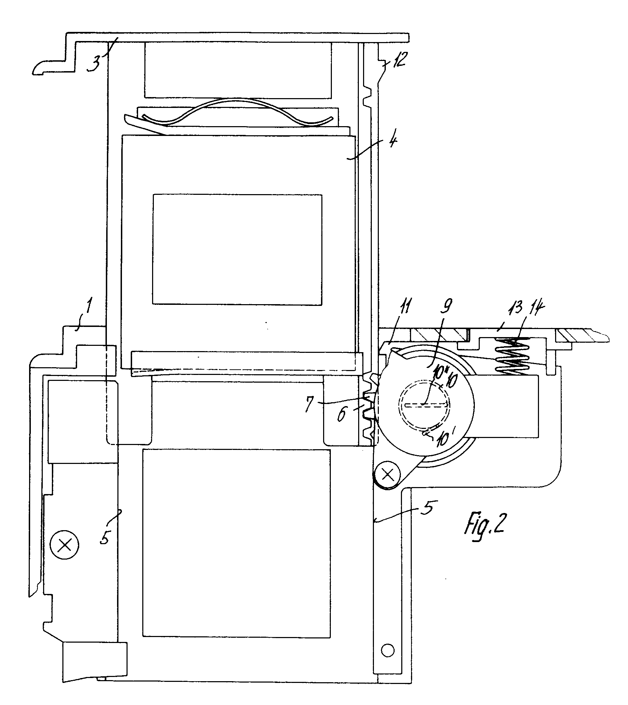

In den Figuren ist mit 1 das Projektorgehäuse bezeichnet, das in Führungen 2 verschieblich einen rahmenförmigen Bildbühnenabschnitt 3 aufnimmt. Der Bildbühnenabschnitt 3 ist in vertikaler Richtung aus einer inneren Stellung (Fig.1) in eine äußere Stellung (Fig.2) verbringbar und für die Aufnahme eines Diapositivs 4 vorgesehen. Der Bildbühnenabschnitt 3 greift mit seinen seitlichen Randstreifen 5 in die Führungen 2 verschieblich ein. Der Bildbühnenabschnitt 3 ist weiter mit einer Zahnstange 6 fest versehen, die mit einem Ritzel 7 kämmt, das beim Ausführungsbeispiel durch einen am Projektorgehäuse vermittels eines Haltezapfens 8 unverdrehbar festgelegten Stützkörpers 9 drehbar gelagert ist. Das Ritzel 7 steht unter der Wirkung einer vorgespannten Drehfeder 10. Die Drehfeder 10 stützt sich hierzu mit einem Schenkel 10' am Ritzel 7 und mit dem anderen Schenkel 10'' am Projektorgehäuse 1 bzw. dem Stützkörper 9 ab. Der Bildbühnenabschnitt 3 ist in der inneren Stellung durch eine Klinke 11 fixierbar, die hierzu eine Nase 12 am Bildbühnenabschnitt 3 übergreift.

Durch Eindrücken eines Betätigungsknopfes 13 entgegen der Feder 14 ist die Klinke 11 zur Freigabe des Bildbühnenabschnitts 3 in Uhrzeigerdrehrichtung verschwenkbar. Das Ritzel 7 taucht, wie die Fig. 3 zeigt, mit einem Ringbund 15 in eine Ausnehmung 16 des Stützkörpers 9 ein, die durch einen Ringbund 17 und einen Randstreifen 18 begrenzt ist. In den durch die gemeinsamen Trennungsflächen der Ringbunde 15,17 und dem Randstreifen 18 begrenzten Räumen ist beim Diaprojektor ein Schmierfettdepot 19 eingebracht, das als zähflüssiges schmierfähiges Medium eine Reibungskraft zwischen Ritzel 7 und Stützkörper 9 ausübt. Unter der Wirkung dieser Reibungskraft wird die Drehgeschwindigkeit des Ritzels 7 gleichmäßig kontinuierlich gebremst, wodurch der unter der Wirkung der Vorspannung der Drehfeder 10 aus der inneren in die äußere Endstellung bewegbare Bildbühnenabschnitt 3 gleichmäßig langsam in die äußere Stellung bewegbar ist. Die Drehfeder 10 ist in dem Ringraum zwischen Haltezapfen 8 und Ringbund 17 angeordnet, der zur Verstärkung der Reibungswirkung ebenfalls mit Medium ausgefüllt sein kann. Es versteht sich, daß das Schmierfett mit einer entsprechend geeigneten Viskosität gewählt ist.

In der äußeren Stellung kann der Bildbühnenabschnitt 3 mit einem Diapositiv gefüllt und durch Aufdrücken in die innere Stellung (Fig. 2) bewegt werden. Bei dieser Einschiebebewegung des Bildbühnenabschnitts 3 erfolgt jeweils eine Spannung der Drehfeder 10 selbsttätig.

## Patentansprüche

1. Diaprojektor mit einem Projektorgehäuse und einer Bildbühne für Diapositive, bei dem die Bildbühne einen zwischen einer inneren Stellung im Projektorgehäuse und einer äußeren Stellung verschiebbaren rahmenförmigen Bildbühnenabschnitt zur Aufnahme eines Diapositivs aufweist, wobei der Bildbühnenabschnitt zum Einsetzen oder Herausnehmen eines Diapositivs mittels einer Drehfeder selbsttätig aus der inneren Stellung in die äußere Stellung führbar und mittels einer Klinke in der inneren Stellung freigebbar fixierbar ist und bei dem der Bildbühnenabschnitt eine Zahnstange aufweist, die mit einem im Projektorgehäuse drehbar angeordneten, durch die Drehfeder vorgespannten Ritzel kämmt, dadurch gekennzeichnet, daß das Ritzel (7) unter Zwischenfügung eines zähflüssigen, gleitfähigen Mediums an einem projektorgehäusefesten Stützkörper (9) frei drehbar anliegt.

2. Diaprojektor nach Anspruch 1, dadurch gekennzeichnet, daß das zähflüssige gleitfähige Medium durch ein Schmierfettdepot (19) mit zähflüssiger Viskosität gebildet ist.

3. Diaprojektor nach Anspruch 1 und 2, dadurch gekennzeichnet, daß das Ritzel (7) mit einem Ringbund (15) unter Bildung eines Labyrinths in eine durch einen stützkörperfesten Ringbund (17) gebildete Ausnehnmung im Stützkörper (9) eintaucht und das die Räume zwischen den Ringbunden (15,17) mindestens abschnittsweise mit zähflüssigem gleitfähigem Medium ausgefüllt sind.

4. Diaprojektor nach Anspruch 1, dadurch gekennzeichnet, daß der Stützkörper (9) topfförmig ausgebildet ist, innen konzentrisch im Abstand zum Ringbund (17) einen den Stützkörper (9) am Projektorgehäuse festlegenden Haltezapfen (8) aufweist, der die Drehfeder (10) stützt und das Ritzel (7) lagert.

5. Diaprojektor nach Anspruch 1, dadurch gekennzeichnet, daß zwischen den Ringbunden (15,17) sowie Ringbund (17) und Haltezapfen (8) Räume gebildet sind und daß diese Räume mit dem zähflüssigen gleitfähigen Medium gefüllt sind.
